# EUROPEAN PATENT APPLICATION

(11) **EP 0 937 664 A1**
(43) Date of publication of application: **25.08.1999**
(21) Application number: 99440035.6
(22) Date of filing: 22.02.1999
(51) Int. Cl.: B65G 33/04

(54) **Apparatus and method for transporting box-like articles form one location to a further location at a different height**

(30) Priority: 24.02.1998 IT MI980355
(71) Applicant: ALCATEL, 75008 Paris (FR)
(72) Inventor: Passero, Adolfo, 81100 Caserta (IT)
(74) Representative: Schätzle, Albin, Dipl.-Phys.

(57) **Abstract**

A method and apparatus for transporting box-like articles (12) from one location to a further location at a different height i.e. a method and apparatus for transporting box-like articles from an upper location to a lower location or vice-versa is provided. The articles (12) are loaded on an end of a helical track (2) extending between the two locations and rotated by a motor. Stop means (5,6,8-11,13) prevents the articles from rotating with the track (2) whereby the articles are forced to translate along a directrix parallel to the axis of rotation of the track (2) and are thus discharged at the other end of the track, at the delivery area. By reversing the rotation of the track (2) and properly positioning the stop means, the movement direction of the articles can be reversed.

## Description

The present invention relates to an apparatus and a method for transporting box-like articles from one location to a further location being placed at a different height.

There nowadays exist various apparatuses for transporting box-like articles, such as parcels, packages and the like, from one location to a further location which is placed at a different height.

The well-known belt conveyor apparatuses, for instance, feature good performances but they require too much space.

Other apparatuses such as tape compartment conveyors (the so-called "paternosters" used in the airports), require synchronous (i.e. aligned) input and output, while flexible conveyor apparatuses do not offer the possibility of providing a buffer, the so-called buffering of the articles.

In U.S. 4,726,456 an apparatus for transporting articles from an upper location to a lower location is illustrated, which apparatus comprises a spiral chute extending between the two locations and having a low frictional surface on which the articles move downwards by gravity. In order to overcome the problems caused by this low frictional surface when articles moving at relatively high speeds are placed thereon, means for reducing the velocity of articles are provided on the upper portion of the chute.

This latter apparatus has the advantage, over those mentioned above, of being less bulky. Moreover, besides the limitation of operating by gravity and therefore only downwards, there is the risk of collision of articles and jam on the track.

The object of the present invention is to overcome the drawbacks of prior art devices.

This object is achieved by an apparatus and a method for transporting box-like articles from one location to a further location at a different height having the features set forth in claims 1 and 6, respectively. The further dependent claims indicate additional and advantageous features. It is to be noted that all the claims should be considered as an integral part of the present description.

The apparatus according to the present invention has the following advantages:
- it effectively operates also in case the input and output are misaligned to each other;
- it causes a low noise;
- it operates both in case the loading location is higher than the discharging location and in the reverse case;
- the transport velocity can be easily changed;
- it is not dependent on the weight of the transported articles;
- it provides a flexible buffering for the articles; and
- it is able to softly handle the articles to be transported.

The invention will be clearly understood from the following description of a preferred but not exclusive embodiment of an apparatus for transporting box-like articles from one location to a further location which is placed at a different height given below and to be taken in conjunction with the accompanying drawings, attached merely as a non limiting example in which:
- Fig. 1 illustrates, through a schematic and partial perspective view, the apparatus according to invention; and
- Fig. 2 is an enlarged view of a detail of the stop means of Fig. 1 for preventing the articles from rotating.

Referring to the figures, 1 stands for a cylindrical shaft, rigidly fixed to which is a ring gear 4 engaging a pinion gear (not shown) driven by a motor 3. A helical track 2 winds around the cylindrical shaft 1 which is fixedly connected to it and extends along its length so that the ends of the helix are at about the loading and downloading locations (not shown) for the articles 12 to be transported.

Stop means are arranged at the side of the track for preventing the articles loaded thereon from rotating about the axis X of the cylinder 1.

In the embodiment described herein, the stop means comprise a channeled loop rail 6, located at the side of the track 2 and lying in a plane parallel to the axis X.

Movable along the channeled rail 6 having a C-shaped section, are stop and guide assemblies which normally stand in a buffer area 7. These assemblies are moved by conventional dragging means, like e.g. the usual chain and ratchet gear apparatuses used in laundries and the like.

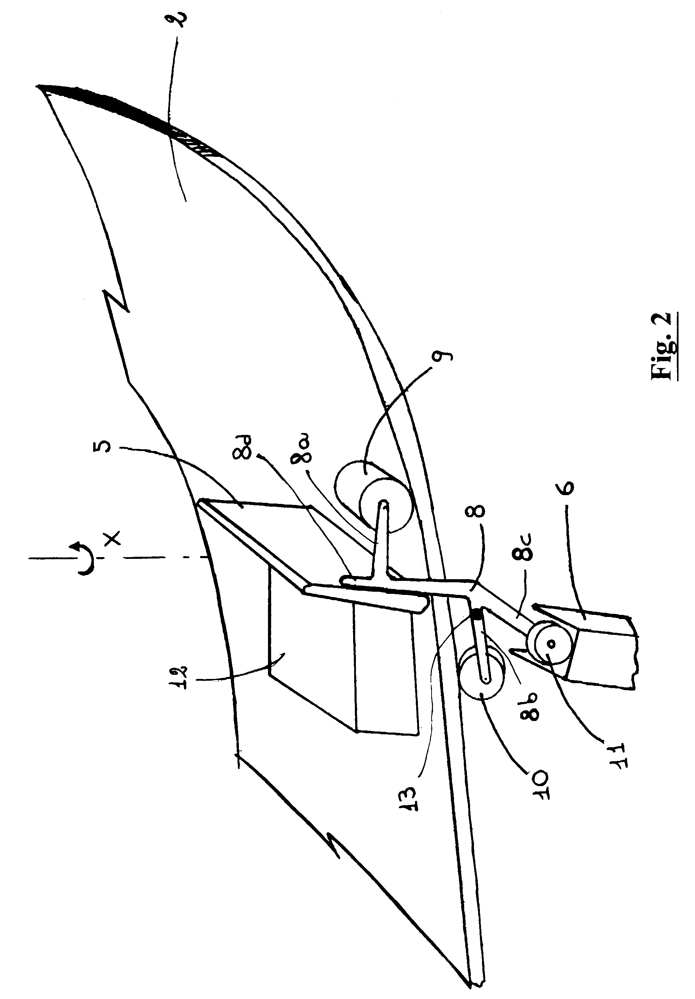

Each of the stop and guide assemblies (see Fig. 2) comprises a four-arm lever 8 whose arms are designated by 8a, 8b, 8c and 8d, respectively. Rotatably mounted on the first arm 8a is a first guide roller 9 which rolls on the upper surface of the track 2. Rotatably mounted on the second arm 8b is a second guide roller 10 which rolls against the lower surface of the track 2. Rotatably mounted on the third arm 8c is a third guide roller 11 which is housed inside the channel of the rail 6, while a stop shovel 5 is rigidly fixed to the fourth arm 8d. Arm 8b is articulated and can be swinged upon command, about an articulated joint 13.

The operation of the apparatus described above is rather simple.

Articles 12 are loaded on the helical track 2, manually or automatically by any means, at a loading location and they start to rotate about the aforesaid axis X frictionally dragged by track 2 which is kept running continuously.

Upon command from the electronic control apparatus (neither shown nor described as it is known and conventional and anyway not relevant to the invention) which controls the whole plant, the stop and guide assemblies are taken from the buffer area 7 and brought into engagement with track 2 so that the stop shovel 5 is positioned downstream (with respect to the direction of rotation) of the respective article, thus preventing the latter from rotating. More specifically, the stop and guide assembly is taken to such a position that the leading edge of track 2 is passed between rollers 9 and 10 whose resilience is such as to maintain the contact with the track.

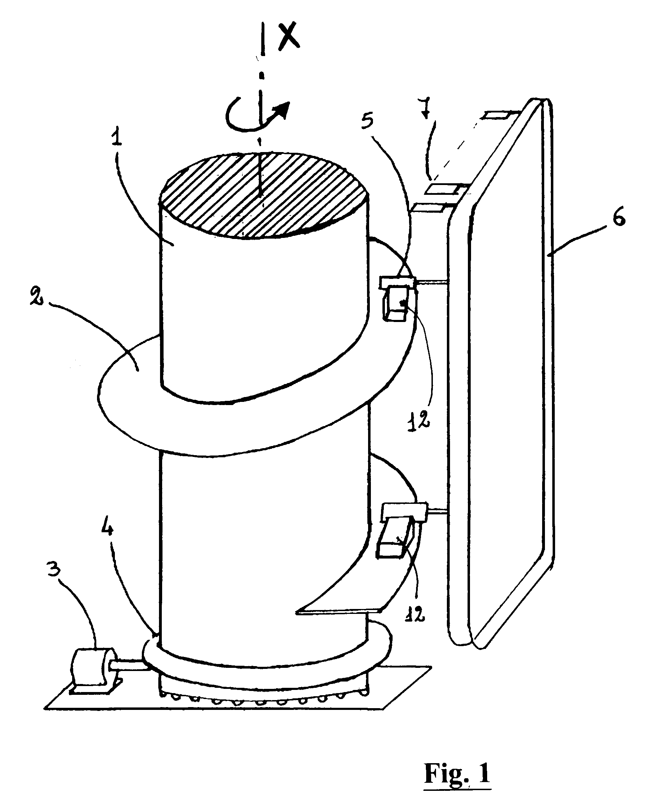

As the track rotates, the articles, according to the worm-screw principle, translate in a direction parallel to the axis of rotation (downwards in the case shown in Fig. 1).

The contact between the article and the shovel is maintained until their delivery since the shovel translates together with the article thanks to the action of guide rollers 9 and 10, and thereafter the aforesaid dragging means provide for restoring the assemblies to the buffer area 7.

As the articles reach the end of the helical track (the lower one in the embodiment of Fig. 1) they are dropped on the floor and taken away by hand or by any means (e.g. a conveyor belt).

Obviously, by reversing the rotation of the shaft 1 and thus of the helical track 2, the articles can be loaded at the lower location and delivered at the upper location. Clearly, the movement direction of the shovels along the rail is also reversed, as well as the position of the buffer area 7, as will be apparent to a person skilled in the art.

When articles are to be buffered, upon command from the electronic control apparatus, the arm 8b is thrown down, i.e. swinged about the articulated joint 13 to an inoperative position, the roller 10 looses touch with the track, the arm 8 and therefore the shovel 5 does not follow the article downwards, whereby the latter does not slide on the track, but it travels under the shovel 5 and revolves in a stationary orbit about the axis X, without translating, until the arm 8b is again at the upright position and the shovel moving down prevents the article from rotating, thus making it translate downwards.

It will be now clear that the present invention fully achieves the above stated objects. In fact, there is provided an apparatus for transporting box-like articles from one location to a further location placed at a different height which, besides being not too bulky, does not require aligned input and output, it is not subjected to risks of collision and jam and further presents the capability of buffering.

Moreover, it is simple in construction and has the advantages listed at the outset. In addition, the transport velocity can be easily changed by changing the rotational speed of the shaft 1 and such a transport velocity is not dependent on the weigh of articles to transport.

Obviously, several modifications and variations are possible which, being apparent to a person skilled in the art, are all falling within the scope of the accompanying claims. For instance, it could be possible to arrange another rail diametrically opposite to the one shown in the figure thus doubling the throughput of the apparatus.

The loading area, normally located at one end of the helical track, could also be arranged at an intermediate level between the two ends, and so on.

Materials and dimensions can also be changed according to the circumstances and requirements of use.

## Claims

1. Apparatus for transporting box-like articles (12) from one location to a further location with the further location being at a different height, comprising a sliding track (2) helically extending between said locations and designed to receive the articles (12) at the one location and deliver them at the further location, characterized in that it further comprises:
- driving means (3) for rotating said track (2) about an axis (X) perpendicular to horizontal planes each containing one of said locations; and
- stop means (5, 6, 8, 9, 10, 11, 13) arranged around said track (2) and designed to prevent the articles (12) from rotating about said axis (X), keeping them aligned on a directrix parallel thereto and along which the articles (12) are translated upwards or downwards according to the rotation direction of the track (2).

2. Apparatus according to claim 1, characterized in that said stop means (5, 6, 8, 9, 10, 11, 13) comprise means (5) which are designed to translate parallel to said axis (X) keeping in touch with the articles (12) until the latter are discharged.

3. Apparatus according to claim 2, characterized in that said stop means comprise:
- a channeled loop rail (6) arranged at the side of said track and lying in a plane parallel to said axis (X);
- at least one stop and guide assembly each comprising
- a four-arm (8a-8d) lever (8);
- a first guide roller (9) rotatably mounted on a first (8a) of said arms and designed to come in contact with the upper surface of said track (2) and roll thereon;
- a second guide roller (10) rotatably mounted on a second (8b) of said arms and designed to come in contact with the lower surface of said track (2) and roll thereon;
- a third guide roller (11) rotatably mounted on a third (8c) of said arms and designed to roll inside the channel of said rail (6);
- a stop shovel (5) fixedly connected to a fourth (8d) of said arms and designed to come in contact with a respective article (12) on the track (2);
and
- dragging means for said stop and guide assemblies designed to draw them from the discharging location to a buffer area along the path of said rail (6).

4. Apparatus according to claim 3, characterized in that said second arm (8b) is articulated (13) and swingable upon command.

5. Apparatus according to claim 3, characterized in that said stop means comprise two rails (6) being arranged symmetrically with respect to said rotation axis (X).

6. Method for transporting box-like articles (12) from one location to a further location, with said further location being at a different high with respect to said one location, comprising the step of providing a sliding track (2) helical extending between said locations and designed to receive the articles (12) at one location and deliver them at the further location, characterized in that it further comprises the step of rotating said track (2) about an axis (X) perpendicular to horizontal planes each containing one of said locations.

7. Method according to claim 6, characterized in that it further comprises the step of preventing the articles (12) from rotating about said axis (X), keeping them aligned on a directrix parallel thereto and along which the articles (12) are translated upwards or downwards according to the rotation direction of the track (2).

8. Method according to claim 7, characterized in that the step of preventing the articles (12) from rotating about axis (X) comprises the step of providing means (5) designed to translate parallel to said axis (X) keeping in touch with the articles (12) until the latter are discharged.

9. Method according to claim 8, characterized in that said means (5) translate by at least one channeled loop rail (6).

10. Method according to any of claims 8-9, characterized in that the movement direction of the articles to be transported can be reversed by reversing the rotation of the track and properly positioning the stop means (5).
